(19) Europäisches Patentamt
European Patent Office
Office européen des brevets

(11) **EP 3 371 799 B1**

(12) **EUROPÄISCHE PATENTSCHRIFT**

(45) Veröffentlichungstag und Bekanntmachung des Hinweises auf die Patenterteilung:
**12.01.2022 Patentblatt 2022/02**

(51) Int Cl.:
***H04L 29/06*** *(2006.01)*

(21) Anmeldenummer: **16785394.4**

(22) Anmeldetag: **13.10.2016**

(86) Internationale Anmeldenummer:
**PCT/EP2016/074562**

(87) Internationale Veröffentlichungsnummer:
**WO 2017/076597 (11.05.2017 Gazette 2017/19)**

(54) **VERFAHREN UND FAHRZEUGKOMMUNIKATIONSSYSTEM ZUM BESTIMMEN EINER FAHRINTENTION FÜR EIN FAHRZEUG**

METHOD AND VEHICLE COMMUNICATION SYSTEM FOR DETERMINING A DRIVING INTENTION FOR A VEHICLE

PROCÉDÉ ET SYSTÈME DE COMMUNICATION DE VÉHICULE POUR DÉTERMINER UNE INTENTION DE CONDUITE POUR UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.11.2015 DE 102015014131**
**29.03.2016 DE 102016205141**

(43) Veröffentlichungstag der Anmeldung:
**12.09.2018 Patentblatt 2018/37**

(73) Patentinhaber: **Volkswagen Aktiengesellschaft 38440 Wolfsburg (DE)**

(72) Erfinder:
• **ENGEL, Monique**
  **38110 Braunschweig (DE)**
• **GLÄSER, Stefan**
  **38104 Braunschweig (DE)**
• **RECH, Bernd**
  **38556 Bokensdorf (DE)**
• **BUBURUZAN, Teodor**
  **38118 Braunschweig (DE)**
• **LEHMANN, Bernd**
  **38444 Wolfsburg (DE)**
• **KLEINAU, Sandra**
  **38531 Rötgesbüttel (DE)**
• **GÜNTHER, Hendrik-Jörn**
  **30173 Hannover (DE)**

(56) Entgegenhaltungen:
**DE-A1-102013 208 758     US-A1- 2014 343 836**
**US-A1- 2015 061 895     US-B2- 8 847 787**

## Beschreibung

Die Erfindung bezieht sich auf ein Verfahren und ein Fahrzeugkommunikationssystem zum Bestimmen einer Fahrintention für ein Fahrzeug, genauer, aber nicht ausschließlich, basierend auf einer Zuordnung von Straßenabschnitten und möglichen Fahrintentionen sowie einer Nutzung von Auslösebedingungen und Auslöser-Größen.

Fahrzeug-zu-Fahrzeug-Kommunikation (auch engl. Car2Car, C2C, oder Vehicle2Vehicle, V2V) und Fahrzeug-zu-Infrastruktur-Kommunikation (auch engl. Car2Infrastructure, C2I oder Vehicle2Roadside, V2R) sind ein Brennpunkt automobiler Forschung im 21. Jahrhundert. Die Kommunikation zwischen Fahrzeugen oder zwischen Fahrzeugen oder Verkehrsinfrastruktur ermöglicht eine Vielzahl neuer Möglichkeiten, beispielsweise eine Koordination von Fahrzeugen untereinander oder eine Kommunikation von Fahrzeugen mit der Verkehrsinfrastruktur, beispielsweise um den Fahrzeugen Stauwarnungen bereitzustellen. Dabei besitzen Fahrzeuge, die zur C2C oder C2I (auch zusammengefasst unter Fahrzeug-zu-X-Kommunikation, engl. Car2X, C2X oder Vehicle2X, V2X) ausgebildet sind eine Sende- und Empfangseinheit um mit anderen Fahrzeugen kommunizieren zu können, beispielsweise über direkte Funkverbindungen oder Mobilfunknetzwerke. Die Kommunikation kann dabei beispielsweise zwischen Fahrzeugen oder zwischen Fahrzeugen und Verkehrsinfrastruktur innerhalb eines Radius von wenigen hundert Metern begrenzt sein.

US 8,847,787 B2 lehrt ein Fahrzeugkreuzungswarnverfahren. Das Verfahren umfasst das Austauschen von Host-Fahrzeuginformationen und entfernten Fahrzeuginformationen zwischen einem Host-Fahrzeug und einem entfernten Fahrzeug, wobei das Vorhandensein einer Straßenkreuzung auf der Grundlage von mindestens entweder der Host-Fahrzeuginformation oder der Fernfahrzeuginformation ermittelt wird.

US 2014/0343836 A1 lehrt ein Verfahren zum Betreiben eines Erstanbieter-Fahrzeugs, das in einer aktuellen Spur entlang einer Straße fährt, die in eine Vielzahl von Spuren unterteilt ist. Das Verfahren umfasst das Bekanntgeben einer beabsichtigten Änderung für das Erstanbieter-Fahrzeug von der aktuellen Spur zu einer weiteren benachbarten Spur durch Aktivierung eines Fahrtrichtungsanzeigers.

DE 10 2013 208 758 A1 lehrt ein Verfahren zum Betreiben eines Fahrzeugs, wobei ein Risikoparameter für einen Fahrstreckenabschnitt einer Fahrstrecke des Fahrzeugs ermittelt wird, wobei der Risikoparameter eine Unfallwahrscheinlichkeit des Fahrzeugs für den Fahrstreckenabschnitt umfasst, wobei das Fahrzeug abhängig von dem Risikoparameter zumindest assistiert gesteuert wird.

Eine Koordination von Fahrzeugen, beispielsweise zum kooperativen Ausführen von Fahrmanövern oder zur Koordination von automatisierten Fahrzeugen, ist häufig abhängig von einer Verfügbarkeit von Nachrichten der kooperierenden Fahrzeuge und von einer Qualität der Daten. Um eine Kooperation durchführen zu können, ist es in manchen Fällen nötig, Nachrichten über eine Fahrintention eines Fahrers bereitzustellen, auf die Fahrzeuge in einer Umgebung reagieren können.

Es besteht der Bedarf nach einem verbesserten Konzept zur Unterstützung von kooperativen Fahrfunktionen. Diesem Bedarf wird durch das Verfahren und das Fahrzeugkommunikationssystem gemäß den unabhängigen Ansprüchen Rechnung getragen.

Ausführungsbeispiele erreichen dies beispielsweise durch Bestimmen einer Fahrintention eines Fahrers des Fahrzeugs. Basierend auf Internen, und gegebenenfalls externen, Auslöser-Größen werden basierend auf Auslösebedingungen mögliche Fahrintentionen für eine Verkehrssituation überprüft. Die in einer Situation möglichen Fahrintentionen hängen dabei von einem aktuellen Straßenabschnitt ab - beispielsweise gibt es bei Autobahnauffahrten, geraden Strecken ohne Abzweigung oder Kreuzungen häufig unterschiedliche mögliche Fahrintentionen. Basierend auf den Auslöser-Größen werden die möglichen Fahrintentionen bewertet und basierend darauf eine wahrscheinliche Fahrintention bestimmt.

Ausführungsbeispiele schaffen ein Verfahren zum Bestimmen einer Fahrintention für ein Fahrzeug. Die Fahrintention umfasst Information über ein prognostiziertes Fahrmanöver. Das Verfahren umfasst Bestimmen einer Position des Fahrzeugs. Das Verfahren umfasst ferner Ermitteln eines Straßenabschnitts basierend auf der Position des Fahrzeugs und einer digitalen Karte. Dem Straßenabschnitt sind ein oder mehrere mögliche Fahrintentionen zugeordnet. Den ein oder mehreren möglichen Fahrintentionen sind ein oder mehrere Auslösebedingungen basierend auf ein oder mehreren Auslöser-Größen zugeordnet. Das Verfahren umfasst ferner Erhalten von Information über interne Auslöser-Größen für die Bestimmung einer aktuellen Fahrintention, basierend auf bordeigenen Sensoren oder Aktoren des Fahrzeugs. Das Verfahren umfasst ferner Bestimmen der Fahrintention, basierend auf dem Straßenabschnitt, der Information über die internen Auslöser-Größen und den ein oder mehreren Auslösebedingungen. Die Fahrintention kann für eine effizientere Koordination von Fahrzeugen bei koordinativen Fahrmanövern genutzt werden. Das Bestimmen der Fahrintention basierend auf den Streckenabschnitten und den Auslöser-Größen ermöglicht eine Bestimmung der Fahrintentionen ohne Mehrbelastung für den Fahrer des Fahrzeugs.

In manchen Ausführungsbeispielen kann das Verfahren ferner ein Bereitstellen einer Fahrintentionsnachricht über eine Fahrzeug-zu-Fahrzeug-Schnittstelle basierend auf der Fahrintention umfassen. Das Bereitstellen der Fahrintentionsnachricht ermöglicht kooperative Fahrmanöver und Fahrfunktionen.

In einigen Ausführungsbeispielen entspricht das Bestimmen der Position einem Satelliten-basierten Bestimmen der Position. Das Satelliten-basierte Bestimmen der Position ermöglicht die Nutzung von digitalen Karten, die beispielsweise für Navigationsanwendungen bereits vorhanden sein können.

In manchen Ausführungsbeispielen kann das Verfahren ferner ein Erhalten von Information über externe Auslöser-Größen für die Bestimmung der Fahrintention über eine Fahrzeug-zu-Fahrzeug-Schnittstelle umfassen. Das Bestimmen kann ferner auf der Information über die externen Auslöser-Größen basieren. Die ein oder mehreren Auslöser-Größen können beispielsweise die internen Auslöser-Größen und/oder die externen Auslöser-Größen umfassen. Die Nutzung der externen Auslöser-Größen ermöglicht ein Einbeziehen anderer Verkehrsteilnehmer (zur Analyse einer Verkehrssituation), etwa deren Position und/oder Fahrintention, und eine Erweiterung der Auslöser-Größen, etwa durch Nutzung von Umfeldinformationen von Sensoren anderer Fahrzeuge.

Die Information über die externen Auslöser-Größen kann zumindest ein Element der Gruppe von Fahrzeug-zu-Fahrzeug-Statusnachrichten, Fahrzeug-zu-Fahrzeug-Fahrintentionsnachrichten und Fahrzeug-zu-Fahrzeug-Nachrichten mit Umfeldinformation von ein oder mehreren weiteren Fahrzeugen 200 umfassen. Die Nutzung der Fahrzeug-zu-Fahrzeug-Nachrichten ermöglicht ein Einbeziehen anderer Verkehrsteilnehmer (zur Analyse einer Verkehrssituation), etwa deren Position und/oder Fahrintention, und eine Erweiterung der Auslöser-Größen, etwa durch Nutzung von Umfeldinformationen von Sensoren anderer Fahrzeuge.

In zumindest manchen Ausführungsbeispielen können die Auslösebedingungen auf ein oder mehreren Wahrscheinlichkeitsfunktionen basierend auf den Auslöser-Größen basieren. Die Nutzung von Wahrscheinlichkeitsfunktionen ermöglicht ein Abwägen von Handlungsalternativen und ermöglicht es widersprüchliche Auslöser-Größen zu werten und zu nutzen.

In manchen Ausführungsbeispielen kann das Bestimmen ferner auf einer Navigationsfunktion des Fahrzeugs basieren. Die Navigationsfunktion kann als starker Indikator für eine Fahrintention genutzt werden, da basierend auf der Navigationsfunktion Abbiegeentscheidungen vorhergesagt werden können.

In zumindest einigen Ausführungsbeispielen kann das Bestimmen ferner auf Information über Verkehrsregeln basieren. Das Bestimmen der Fahrintention kann die Fahrintention so bestimmen, dass keine Verkehrsregeln verletzt werden. Die Nutzung der Verkehrsregeln, beispielsweise von Abstandsregeln oder Höchstgeschwindigkeitsregeln, ermöglicht eine Einschränkung der möglichen oder wahrscheinlichen Fahrintentionen und eine genauere Bestimmung der Fahrintention.

In manchen Ausführungsbeispielen kann das Bestimmen auf einer Lernfunktion basieren. Das Bestimmen kann die Fahrintention ferner basierend auf vorhergehenden Fahrmanövern eines Fahrers des Fahrzeugs basieren. Eine Nutzung der vorhergehenden Fahrmanöver über eine Lernfunktion ermöglicht eine genauere Bestimmung der Fahrintention durch Berücksichtigung eines Fahrstils oder einer Fahrdynamik des Fahrers.

Ausführungsbeispiele schaffen ferner ein Fahrzeugkommunikationssystem zum Bestimmen einer Fahrintention für ein Fahrzeug. Die Fahrintention umfasst Information über ein prognostiziertes Fahrmanöver. Das Fahrzeugkommunikationssystem ist ausgebildet zum Bestimmen einer Position des Fahrzeugs. Das Fahrzeugkommunikationssystem ist ferner ausgebildet zum Ermitteln eines Straßenabschnitts basierend auf der Position des Fahrzeugs und einer digitalen Karte. Dem Straßenabschnitt sind ein oder mehrere mögliche Fahrintentionen zugeordnet. Den ein oder mehreren möglichen Fahrintentionen sind ein oder mehrere Auslösebedingungen basierend auf ein oder mehreren Auslöser-Größen zugeordnet. Das Fahrzeugkommunikationssystem ist ferner ausgebildet zum Erhalten von Information über interne Auslöser-Größen für die Bestimmung einer aktuellen Fahrintention, basierend auf bordeigenen Sensoren oder Aktoren des Fahrzeugs. Das Fahrzeugkommunikationssystem ist ferner ausgebildet zum Fahrzeugkommunikationssystem Bestimmen der Fahrintention, basierend auf dem Straßenabschnitt, der Information über die internen Auslöser-Größen und den ein oder mehreren Auslösebedingungen.

Ausführungsbeispiele schaffen ferner ein Fahrzeug, umfassend das Fahrzeugkommunikationssystem. Ausführungsbeispiele schaffen ferner ein Programm mit einem Programmcode zum Durchführen zumindest des Verfahrens wenn der Programmcode auf einem Computer, einem Prozessor, einem Kontrollmodul oder einer programmierbaren Hardwarekomponente ausgeführt wird.

Weitere vorteilhafte Ausgestaltungen werden nachfolgend anhand der in den Zeichnungen dargestellten Ausführungsbeispiele, auf welche Ausführungsbeispiele generell jedoch nicht insgesamt beschränkt sind, näher beschrieben. Es zeigen:

Fig. 1    illustriert ein Flussdiagramm eines Ausführungsbeispiels eines Verfahrens zum Bestimmen einer Fahrintention für ein Fahrzeug;

Fig. 1a    illustriert ein Flussdiagramm eines weiteren Ausführungsbeispiels des Verfahrens zum Bestimmen der Fahrintention für das Fahrzeug; und

Fig. 2    illustriert ein Blockdiagramm eines Ausführungsbeispiels eines Fahrzeugkommunikationssystems.

Verschiedene Ausführungsbeispiele werden nun ausführlicher unter Bezugnahme auf die beiliegenden Zeichnungen beschrieben, in denen einige Ausführungsbeispiele dargestellt sind. In den Figuren können die Dickenabmessungen von Linien, Schichten und/oder Regionen um der Deutlichkeit Willen übertrieben dargestellt sein.

Bei der nachfolgenden Beschreibung der beigefügten Figuren, die lediglich einige exemplarische Ausführungsbeispiele zeigen, können gleiche Bezugszeichen gleiche oder vergleichbare Komponenten bezeichnen. Ferner können zusammenfassende Bezugszeichen für Komponenten und Objekte verwendet werden, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Obwohl Ausführungsbeispiele auf verschiedene Weise modifiziert und abgeändert werden können, sind Ausführungsbeispiele in den Figuren als Beispiele dargestellt und werden hierin ausführlich beschrieben. Es sei jedoch klargestellt, dass nicht beabsichtigt ist, Ausführungsbeispiele auf die jeweils offenbarten Formen zu beschränken, sondern dass Ausführungsbeispiele vielmehr sämtliche funktionale und/oder strukturelle Modifikationen, Äquivalente und Alternativen, die im Bereich der Erfindung liegen, abdecken sollen. Gleiche Bezugszeichen bezeichnen in der gesamten Figurenbeschreibung gleiche oder ähnliche Elemente.

Man beachte, dass ein Element, das als mit einem anderen Element "verbunden" oder "verkoppelt" bezeichnet wird, mit dem anderen Element direkt verbunden oder verkoppelt sein kann oder dass dazwischenliegende Elemente vorhanden sein können. Wenn ein Element dagegen als "direkt verbunden" oder "direkt verkoppelt" mit einem anderen Element bezeichnet wird, sind keine dazwischenliegenden Elemente vorhanden. Andere Begriffe, die verwendet werden, um die Beziehung zwischen Elementen zu beschreiben, sollten auf ähnliche Weise interpretiert werden (z.B., "zwischen" gegenüber "direkt dazwischen", "angrenzend" gegenüber "direkt angrenzend" usw.).

Die Terminologie, die hierin verwendet wird, dient nur der Beschreibung bestimmter Ausführungsbeispiele und soll die Ausführungsbeispiele nicht beschränken. Wie hierin verwendet, sollen die Singularformen "einer," "eine", "eines " und "der, die, das" auch die Pluralformen beinhalten, solange der Kontext nicht eindeutig etwas anderes angibt. Ferner sei klargestellt, dass die Ausdrücke wie z.B. "beinhaltet", "beinhaltend", "aufweist", "umfasst", "umfassend" und/oder "aufweisend", wie hierin verwendet, das Vorhandensein von genannten Merkmalen, ganzen Zahlen, Schritten, Arbeitsabläufen, Elementen und/oder Komponenten angeben, aber das Vorhandensein oder die Hinzufügung von einem bzw. einer oder mehreren Merkmalen, ganzen Zahlen, Schritten, Arbeitsabläufen, Elementen, Komponenten und/oder Gruppen davon nicht ausschließen.

Solange nichts anderes definiert ist, haben sämtliche hierin verwendeten Begriffe (einschließlich von technischen und wissenschaftlichen Begriffen) die gleiche Bedeutung, die ihnen ein Durchschnittsfachmann auf dem Gebiet, zu dem die Ausführungsbeispiele gehören, beimisst. Ferner sei klargestellt, dass Ausdrücke, z.B. diejenigen, die in allgemein verwendeten Wörterbüchern definiert sind, so zu interpretieren sind, als hätten sie die Bedeutung, die mit ihrer Bedeutung im Kontext der einschlägigen Technik konsistent ist, und nicht in einem idealisierten oder übermäßig formalen Sinn zu interpretieren sind, solange dies hierin nicht ausdrücklich definiert ist.

Kooperative Fahrfunktionen, bei denen die V2X-Technologie Anwendung findet, leisten einen Beitrag zur Verbesserung des Verkehrsflusses, zur Vermeidung von Verkehrsunfällen und zur Erhöhung des Fahrkomforts. Bei der V2X-Technologie erfolgt entweder eine direkte oder indirekte (z.B. mittels eine Basisstation) Kommunikation mit einem Austausch von Nachrichten zwischen den Verkehrsteilnehmern sowie mit der straßenseitigen Infrastruktur. Unter V2X-Kommunikation wird die Fahrzeug-Fahrzeug (V2V) und die Fahrzeug-Infrastruktur-Kommunikation (V2I) zusammengefasst.

Bei der V2X-Kommunikation werden unterschiedliche Nachrichten ausgetauscht. Ein Nachrichtentyp ist die o. g. *Intention Message,* welche Informationen über Fahrintentionen enthält. Im Falle eines automatischen Fahrbetriebs können Fahrintentionsnachrichten aus der Routen- und Bahnplanung abgeleitet werden. Im Falle des teilautomatischen Fahrens (z.B. mit manueller Querführung) oder des manuellen Fahrens können Fahrintentionen beispielsweise vom Fahrer explizit eingegeben oder vom Fahrzeugsystem auf Basis einer Situationsanalyse geschätzt werden. Das Erkennen der Fahrintention kann als Trigger-Bedingung für den Start einer Funktion oder eines Fahrmanövers und/oder für das Aussenden einer Fahrintentionsnachricht genutzt werden. In diesem Zusammenhang wird erfinderisch im Folgenden der Ansatz einer ortsbasierten Trigger-Bedingung erweitert.

Die Aktivierung, der Abbruch und das Beenden einer kooperativen Fahrfunktion oder eines kooperativen Manövers können erfolgen, wenn bestimmte Auslöser-Bedingungen (Trigger-Bedingungen) erfüllt sind. Die dazugehörenden Auslöser (Trigger)-Größen/-Signale werden vom Fahrzeugsystem beispielsweise ständig beobachtet und nach dem Kriterium Erfüllung der Trigger-Bedingungen bewertet. Unter Trigger-Bedingungen werden Auslösekriterien, Auslöseparameter oder eine Anzahl von vorbestimmten Ereignissen und/oder Parametern verstanden, die zur Auslösung eines Signals, einer Aktion oder einer Funktion führen.

Auslöser-Größen werden in zumindest manchen Ausführungsbeispielen von der bordeigenen Sensorik geliefert. Daneben können auch V2X-Nachrichten von anderen Verkehrsteilnehmern oder von einer straßenseitigen Infrastruktur als Trigger-Größen dienen. Eine Idee der Erfindung ist es, die von externen Signalquellen, über V2X-Kommunikation erhaltenen Trigger-Größen in Kombination mit den intern erzeugten Trigger-Größen zu verwenden, um Funktionen oder Manöver zu aktivieren, abzubrechen oder zu beenden.

Es wird in manchen Ausführungsbeispielen vorausgesetzt, dass das Fahrzeug den Straßenverlauf und seine Position kennt, beispielsweise aus einer digitalen Karte und mithilfe eines Systems zur Positionsbestimmung wie einem GPS. Ausgehend von der errechneten Ego-Position (Position des eigenen Fahrzeugs) auf einer digitalen Karte (gespeichert, mittels V2X-Technologie empfangen oder zur Laufzeit ermittelt aus Sensordaten) lassen sich Straßenabschnitte (möglicherweise mit der Detaillierung Fahrstreifen) ermitteln, in denen mit großer Wahrscheinlichkeit bestimmte Fahrintentionen bestehen werden. Beispielsweise kann die Intention "Einfädeln" angenommen werden bei Fahrzeugen auf Auffahrten, vor Spursperrungen oder vor Fahrbahnverengungen für zu breite Fahrzeuge. Aus einer Analyse des Straßenverlaufs kann der Beginn der Intention abgeleitet werden. Beispielsweise kann der Beginn der Intention "Einfädeln auf die Autobahn" definiert werden als der Zeitpunkt, an dem das Fahrzeug auf die Autobahnauffahrt fährt.

Es gibt Situationen, in denen mit großer Wahrscheinlichkeit anzunehmen ist, dass eine bestimmte Intention besteht, wie beispielsweise die Intention "Fahrstreifenwechsel" vor dem

Ende eines Fahrstreifens (beispielsweise aufgrund einer Baustelle). Jedoch sind auch Situationen vorstellbar, bei denen die Intention mit einer geringeren Wahrscheinlichkeit besteht, weil grundsätzlich mehrere Handlungsoptionen bestehen. Ein Beispiel ist die Aufforderung eines Navigationssystems in einem bestimmten Straßenbereich den Fahrstreifen zu wechseln oder Abzubiegen, wenn auch eine Geradeausfahrt auf dem aktuellen Fahrstreifen möglich ist. Informationen aus dem Navigationssystem können grundsätzlich auch als Trigger-Größen verwendet werden.

Deshalb wird weiterhin erfinderisch vorgeschlagen, den einzelnen Trigger-Größen eine Wahrscheinlichkeit zuzuordnen, mit der die Intention besteht, wenn die Trigger-Größe ihre Trigger-Bedingung erfüllt. Dies beinhaltet eine Analyse der Handlungsoptionen und berücksichtigt in diesem Zusammenhang auch die lokal geltenden Verkehrsregeln. Grundsätzlich können Fahrzeuge über entsprechend notwendige Informationen verfügen, beispielsweise durch eine Backend-Anbindung oder einer Verkehrszeichenkamera und Kartendaten.

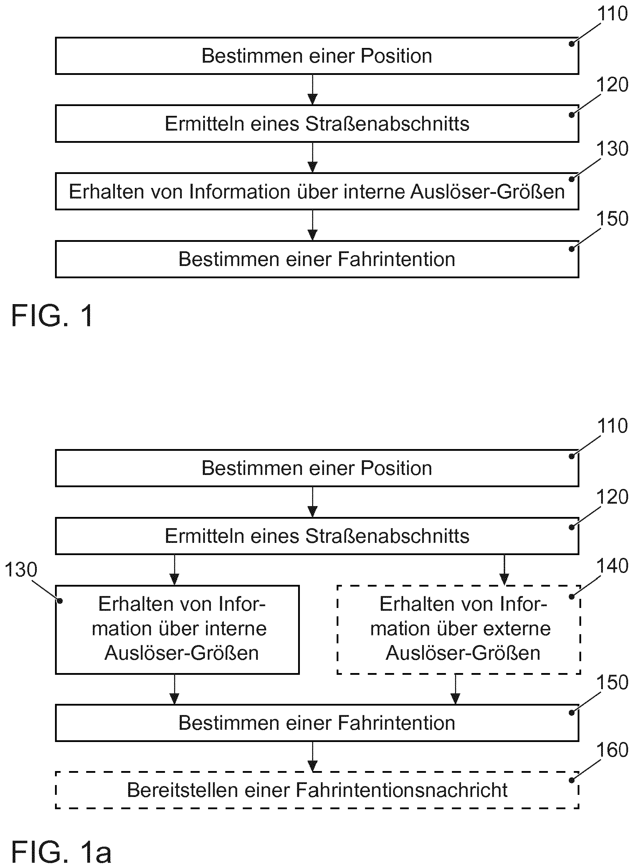

Fig. 1 illustriert ein Flussdiagramm eines Ausführungsbeispiels eines Verfahrens zum Bestimmen einer Fahrintention für ein Fahrzeug 100. Die Fahrintention umfasst Information über ein prognostiziertes Fahrmanöver umfassen. In manchen Ausführungsbeispielen kann die Fahrintention Information über eine prognostizierte Trajektorie des prognostizierten Fahrmanövers umfassen, beispielsweise als Zeit-Positions-Angabe oder als Angabe eines Zielbereiches der Fahrintention. Die Fahrintention kann beispielsweise eine Information über einen zukünftigen Einfädelwunsch, einen zukünftigen Überholwunsch, oder einen zukünftigen Abbiegewunsch des Fahrzeugs 100 umfassen. Fahrintentionen können ferner beispielsweise ein Fahrstreifenwechsel, ein Einfädeln, ein Einparken, ein Ausparken, oder eine Allokation von Straßenfläche für Manöver sein.

In zumindest manchen Ausführungsbeispielen könnte das Fahrzeug 100 beispielsweise einem Landfahrzeug, einem Straßenfahrzeug, einem Auto, einem Kraftfahrzeug, oder einem Lastkraftfahrzeug entsprechen.

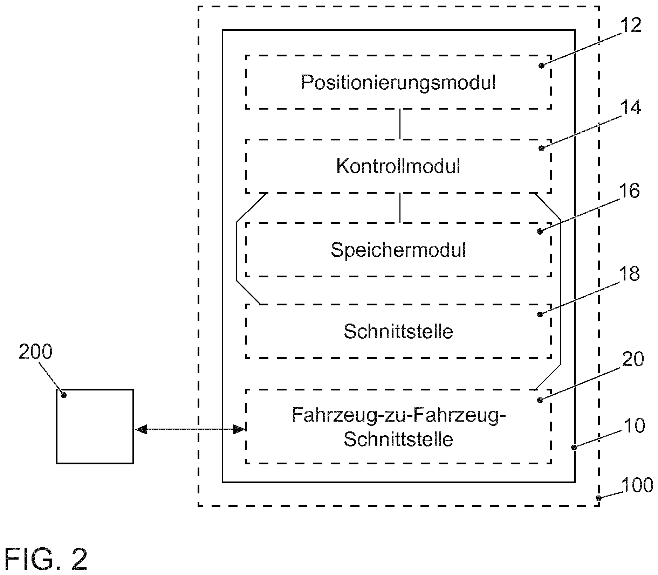

Fig. 2 illustriert ein Blockdiagramm eines Ausführungsbeispiels eines Fahrzeugkommunikationssystems 10, ausgebildet zum Ausführen der Vorrichtung.

Das Verfahren umfasst Bestimmen 110 einer Position des Fahrzeugs 100. In zumindest manchen Ausführungsbeispielen kann das Bestimmen 110 einem Satelliten-basierten

Bestimmen der Position entsprechen. Die Position kann beispielsweise absoluten Koordinaten oder Koordinaten relativ zu einem globalen oder überregionalen Referenzpunkt entsprechen. In zumindest manchen Ausführungsbeispielen kann die Position geographischen Koordinaten oder Koordinaten eines Globalen Positionierungs-Systems (GPS) entsprechen. In zumindest manchen Ausführungsbeispielen kann das Fahrzeugkommunikationssystem 10 ein Positionierungsmodul 12 umfassen, ausgebildet zum Bestimmen 110 der Position des Fahrzeugs.

Das Verfahren umfasst ferner Ermitteln 120 eines Straßenabschnitts basierend auf der Position des Fahrzeugs und einer digitalen Karte. Dem Straßenabschnitt sind ein oder mehrere mögliche Fahrintentionen zugeordnet. Den ein oder mehreren möglichen Fahrintentionen sind ein oder mehrere Auslösebedingungen basierend auf ein oder mehreren Auslöser-Größen (Trigger-Größen) zugeordnet. In zumindest manchen Ausführungsbeispielen kann das Fahrzeugkommunikationssystem 10 ein Kontrollmodul 14 umfassen, ausgebildet zum Ermitteln 120, und/oder ein Speichermodul 16, ausgebildet zum Speichern der digitalen Karte. Die digitale Karte kann die ein oder mehreren Fahrintentionen und die ein oder mehreren Auslösebedingungen der Fahrintentionen umfassen.

Beispielsweise kann die digitale Karte eine Zuordnung der Straßenabschnitte zu den Fahrintentionen und den Auslösebedingungen umfassen. Beispielsweise kann die die digitale Karte für die Straßenabschnitte Information über eine Ausdehnung des jeweiligen Straßenabschnitts, Information über ein oder mehrere mögliche Fahrintentionen für den jeweiligen Straßenabschnitt und/oder Information über die Auslösebedingungen für die jeweiligen Fahrintentionen umfassen, um eine Entscheidung zwischen den mehreren Fahrintentionen zu ermöglichen und um beispielsweise abzuschätzen, ob eine Fahrintention abgeschätzt werden kann, beispielsweise ob eine Wahrscheinlichkeit für eine Fahrintention basierend auf den Auslöser-Größen hoch genug ist. In manchen Ausführungsbeispielen kann die digitale Karte beispielsweise eine Zuweisung von Positionen oder Gebieten zu Straßenabschnitten umfassen. Beispielsweise können von der digitalen Karte lediglich Orte erfasst sein, in denen Straßen erschlossen sind.

In manchen Ausführungsbeispielen kann die digitale Karte in Karteninformationen eines Navigationsmoduls des Fahrzeugs 100 umfasst sein. Beispielsweise kann die digitale Karte periodisch oder ereignisbasiert zumindest teilweise erneuert werden, etwa bei einer Wartung des Fahrzeugs 100, über ein Mobilfunksystem oder durch Fahrzeug-zu-Infrastruktur-Kommunikation von Verkehrsinfrastruktur am Straßenrand (auch engl. Roadside Unit). Beispielsweise kann die digitale Karte im Falle einer Baustelle zumindest temporär über Fahrzeug-zu-Infrastruktur-Kommunikation erneuert werden. Alternativ oder zusätzlich kann das Kontrollmodul 14 ausgebildet sein, um die digitale Karte Straßenabschnittsweise oder Regionsweise von der Verkehrsinfrastruktur am Straßenrand zu erhalten.

In manchen Ausführungsbeispielen können die Straßenabschnitte auf Mustern basieren, wobei die Muster beispielsweise zumindest ein Element der Gruppe von Abbiegespur, Kreuzung, Ampelkreuzung, Strecke mit Überholmöglichkeit, Autobahnkreuz, Straße mit Beschleunigungsstreifen, Kreisverkehr, Auffahrt, Spursperrung, Fahrbahnverengung, Straße mit Parkmöglichkeit und Parkplatz umfassen können. Beispielsweise kann die digitale Karte eine Zuordnung von Positionen zu Mustern von Straßenabschnitten umfassen. In manchen Ausführungsbeispielen kann das Verfahren ferner ein Bestimmen der digitalen Karte basierend auf Sensordaten umfassen. Beispielsweise kann das Bestimmen der digitalen Karte umfassen, wie viele Fahrspuren die Straße hat, ob es zu einer Straßenverengung kommt, ob eine Auffahrt zur Straße vorliegt, ob die Straße Überholmanöver ermöglicht (anhand der Anzahl von Fahrspuren/Verkehrsschildern) etc. Beispielsweise kann das Bestimmen der digitalen Karte ein Erkennen eines Musters eines zu befahrenden Straßenabschnitts basierend auf Kamerasensordaten, Entfernungs-/Laufzeitsensordaten und/oder Fahrzeug-zu-Infrastruktur-Kommunikation von Verkehrsinfrastruktur am Straßenrand umfassen. Beispielsweise kann das Bestimmen der digitalen einem Erkennen des zu befahrenden Straßenabschnitts-Musters entsprechen.

In zumindest manchen Ausführungsbeispielen beziehen sich die Auslösebedingungen auf die ein oder mehreren Auslöser-Größen. Beispielsweise können die Auslösebedingungen Schwellenwerten entsprechen, über- oder unterschreitet die zugeordnete Auslöser-Größe den Schwellenwert, so kann dies für oder gegen eine Fahrintention sprechen. Alternativ oder zusätzlich können die Auslösebedingungen auf ein oder mehreren Wahrscheinlichkeitsfunktionen basierend auf den Auslöser-Größen basieren. Beispielsweise können die Wahrscheinlichkeitsfunktionen eine Wahrscheinlichkeit für ein Eintreten eines Fahrmanövers einer Fahrintention basierend auf ein oder mehreren Auslöser-Größen berechnen. Beispielsweise können die Wahrscheinlichkeitsfunktionen kumulativ definiert sein. Beispielsweise kann eine Kombination aus Auslöser-Größen in einer Wahrscheinlichkeitsfunktion bedacht sein, wobei die unterschiedlichen Auslöser-Größen eine unterschiedliche Gewichtung haben können.

Das Verfahren umfasst ferner ein Erhalten 130 von Information über interne Auslöser-Größen für die Bestimmung einer aktuellen Fahrintention, basierend auf bordeigenen Sensoren oder Aktoren des Fahrzeugs 100. Die internen Auslöser-Größen können beispielsweise in den Auslöser-Größen umfasst sein. In zumindest manchen Ausführungsbeispielen können die internen Auslöser-Größen Sensordaten der bordeigenen Sensoren entsprechen, beispielsweise Sensorrohdaten oder verarbeiteten Sensordaten. Das Erhalten 130 kann beispielsweise über einen Fahrzeug-Kontroll-Bus durchgeführt werden, beispielsweise über ein Steuerungs-Netzwerk (auch engl. Controller Area Network, CAN). Dazu kann beispielsweise eine Schnittstelle 18 des Fahrzeugkommunikationssystems 10 genutzt werden.

In Ausführungsbeispielen kann das Positionierungsmodul 12 als beliebige Komponente implementiert sein, die eine Ermittlung oder Bestimmung von Information bzgl. einer Position der Vorrichtung oder des Positionierungsmoduls 12 erlaubt. Denkbar sind beispielsweise Empfänger für satellitengestützte Navigationssysteme, z.B. ein GPS-Empfänger (von engl. Global Positioning System, globales Positionierungssystem), oder auch andere Komponenten, die beispielsweise über Triangulation von empfangen Funksignalen eine Positionsbestimmung zulassen. Die Position des Fahrzeugs 100 kann beispielsweise eine absolute Position des Fahrzeugs 100, etwa als Längen- und Breitenmaß oder als GPS-Koordinate umfassen, oder eine relative Position des Fahrzeugs, beispielsweise relativ zu Koordinaten der digitalen Karte.

In Ausführungsbeispielen kann das Kontrollmodul 14 einem beliebigen Controller oder Prozessor oder einer programmierbaren Hardwarekomponente entsprechen. Beispielsweise kann das Kontrollmodul 14 auch als Software realisiert sein, die für eine entsprechende Hardwarekomponente programmiert ist. Insofern kann das Kontrollmodul 14 als programmierbare Hardware mit entsprechend angepasster Software implementiert sein. Dabei können beliebige Prozessoren, wie Digitale Signalprozessoren (DSPs) zum Einsatz kommen. Ausführungsbeispiele sind dabei nicht auf einen bestimmten Typ von Prozessor eingeschränkt. Es sind beliebige Prozessoren oder auch mehrere Prozessoren zur Implementierung des Kontrollmoduls 14 denkbar. Das Kontrollmodul 14 ist beispielsweise ausgebildet, um die Verfahrensschritte 110-160 auszuführen.

Das Speichermodul 16 kann beispielsweise zumindest ein Element der Gruppe von computerlesbares Speichermedium, magnetisches Speichermedium, optisches Speichermedium, Festplatte, Flash-Speicher, Diskette, Zufallszugriffsspeicher (auch engl. Random Access Memory), Programmable Read Only Memory (PROM), Erasable Programmable Read Only Memory (EPROM), Electronically Erasable Programmable Read Only Memory (EEPROM), und Netzwerkspeicher umfassen.

Die zumindest eine Schnittstelle 18 kann beispielsweise einem oder mehreren Eingängen und/oder einem oder mehreren Ausgängen zum Empfangen und/oder Übertragen von Informationen entsprechen, etwa in digitalen Bitwerten, basierend auf einem Code, innerhalb eines Moduls, zwischen Modulen, oder zwischen Modulen verschiedener Entitäten.

Die Information über die internen Auslöser-Größen kann beispielsweise Information über zumindest ein Element der Gruppe von Geschwindigkeit des Fahrzeugs 100, Differenzgeschwindigkeit des Fahrzeugs 100 zu einem weiteren Fahrzeug, Beschleunigung des Fahrzeugs 100, Abstand zu anderen Verkehrsteilnehmern, Abstand zu Hindernissen, Betätigung von Bremspedal, Gaspedal oder Kupplungspedal, Drehen des Lenkrades (Änderung von Winkel oder Moment), manuelle Eingabe (Betätigung eines Bedienelementes beispielsweise Tasten am Lenkrad, Blinkerhebel), Blickrichtung des Fahrers, Spracheingabe, Gestik des Fahrers, Ablauf eines Zeitintervalls, Erreichen eines Zeitpunkts, Position des Fahrzeugs, Wetterbedingung, Detektierter Regen, und Eingriff eines Sicherheitssystems umfassen.

Die Auslösebedingungen (Trigger-Bedingungen) können beispielsweise auf den internen Auslöser-Größen basieren. Auslösebedingungen können beispielsweise sein:

- Überschreitung/Unterschreitung von Grenzwerten bordeigener Sensor-/Aktorsignale

  - Geschwindigkeits-Grenzwert
  - Differenzgeschwindigkeits-Grenzwert
  - Beschleunigungs-Grenzwert
  - Abstands-Grenzwerte zu anderen Verkehrsteilnehmern oder Hindernissen, wie beispielsweise Fahrzeugen, Radfahrern, Fußgängern, Leitplanken (feste Hindernisse)

- Informationen aus Fahrerinteraktionen, wie die Betätigung von Bremspedal, Gaspedal oder Kupplungspedal, Drehen des Lenkrades (Änderung von Winkel oder Moment), manuelle Eingabe (Betätigung eines Bedienelementes beispielsweise Tasten am Lenkrad, Blinkerhebel), Blickrichtung des Fahrers, Spracheingabe, Gestik.
- Zeitlich: Es ist möglich, zeitabhängige Trigger-Bedingungen zu definieren, wie beispielsweise der Ablauf eines definierten Zeitintervalls oder das Erreichen eines bestimmten Zeitpunktes.
- Örtlich: Hat das Fahrzeug eine bestimmte Position erreicht, so kann eine Funktion oder ein Manöver aktiviert werden. Das Fahrzeug bestimmt hierzu beispielsweise mit einem GPS seine Position und gleicht diese mit Daten einer digitalen Karte ab.
- Wetterbedingungen: Wetterbedingungen können Trigger-Bedingungen oder Trigger-Vorbedingung sein. Zum Beispiel können detektierter Regen und ein ESP-Eingriff für eingreifende Fahrerassistenzsysteme eine Vorbedingung darstellen.

Das Verfahren umfasst ferner Bestimmen 150 der Fahrintention, basierend auf dem Straßenabschnitt, der Information über die internen Auslöser-Größen und den ein oder mehreren Auslösebedingungen. Das Bestimmen 150 kann beispielsweise ein Berechnen von Wahrscheinlichkeitsfunktionen für die Auslösebedingungen basierend auf den Auslöser-Größen umfassen. Beispielsweise kann das Bestimmen 150 einem Prüfen von einzelnen Auslösebedingungen entsprechen. Alternativ oder zusätzlich kann das Bestimmen 150 ein Berechnen eines kumulierten Wahrscheinlichkeitswerts basierend auf mehreren Auslösebedingungen entsprechen. Zur Reduzierung der Fehlerwahrscheinlichkeit können in manchen Ausführungsbeispielen mehrere Auslöser-Größen in einer Auslösebedingung verknüpft sein.

In manchen Ausführungsbeispielen das Bestimmen 150 auf einer Lernfunktion basieren. Das Bestimmen 150 kann die Fahrintention beispielsweise ferner basierend auf vorhergehenden Fahrmanövern eines Fahrers des Fahrzeugs berechnen. Beispielsweise könnte Information über die vorhergehenden Fahrmanöver des Fahrers auf dem Speichermodul 16 gespeichert sein, und/oder das Verfahren könnte ferner ein Bestimmen und/oder Speichern der Information über die vorhergehenden Fahrmanöver umfassen. Die Information über die vorhergehenden Fahrmanövern kann beispielsweise Information über eine Wahrscheinlichkeit für ein Durchführen eines Fahrmanövers, beispielsweise eines Überholmanövers, durch den Fahrer des Fahrzeugs 100 umfassen. Beispielsweise kann das Verfahren ferner ein Berechnen der Wahrscheinlichkeit für das Durchführen des Fahrmanövers basierend auf den gespeicherten Fahrmanövern umfassen.

In manchen Ausführungsbeispielen kann das Bestimmen 150 ferner auf einer Navigationsfunktion des Fahrzeugs 100 basieren. Beispielsweise kann eine Routenplanung der Navigationsfunktion genutzt werden, um die Fahrintention zu bestimmen, etwa basierend auf Spurwechsel-Anweisungen oder Abbiege-Anweisungen.

In einigen Ausführungsbeispielen kann das Bestimmen 150 ferner auf Information über Verkehrsregeln basieren. Das Bestimmen 150 der Fahrintention kann die Fahrintention so bestimmen, dass keine Verkehrsregeln verletzt werden. Alternativ oder zusätzlich kann das Bestimmen 150 Fahrintention der ein oder mehreren Fahrintentionen ausschließen, wenn diese gegen die Verkehrsregeln, beispielsweise unter einer Ausnutzung von Toleranzgrenzen, verstoßen. Beispielsweise können die Verkehrsregeln lokal angepasst sein. Die digitale Karte kann beispielsweise die Information über die Verkehrsregeln als Information über lokale Verkehrsregeln umfassen. Alternativ oder zusätzlich können die lokalen Verkehrsregeln ferner auf einer Verkehrszeichenkamera, einer Lichtsignalkamera und/oder Nachrichten einer Lichtsignalanlage basieren.

Erfinderisch können noch weitere Szenarien behandelt werden. Beispielsweise kann sich bei dem Bestimmen 150 die Wahrscheinlichkeit der Intention des Fahrstreifenwechsels zum Zweck des Überholens erhöhen, wenn die Geschwindigkeit des Ego-Fahrzeugs (beispielsweise bei Fahrt mit ACC, Adaptive Cruise Control, adaptiver Abstandsregeltempomat) im Vergleich zu einem vor dem Ego-Fahrzeug fahrenden langsameren Fahrzeug zunehmend größer wird, bzw. der Abstand kleiner wird. Auch könnten Intentionen aus der Ausgabe einer Fahrerassistenzfunktionen (Parkassistenz, Abbiegeassistent, Überholassistent) oder der Routenführung einer Navigation abgeleitet werden. In diesem Zusammenhang können auch spezielle Intentionen von Nutzfahrzeugen genannt werden, die für geplante Manöver Straßenflächen benachbarter Fahrstreifen belegen müssen, wodurch für die übrigen Verkehrsteilnehmer Gefahrenräume entstehen. Schließlich ist auch noch die Interaktion des Fahrers zu nennen, der aus anderen als den o.g. Gründen einen Fahrstreifenwechsel initiieren möchte.

In zumindest manchen Ausführungsbeispielen kann das Verfahren, wie in Fig. 1a gezeigt, ferner ein Bereitstellen 160 einer Fahrintentionsnachricht über eine Fahrzeug-zu-Fahrzeug-Schnittstelle, beispielsweise über eine Fahrzeug-zu-Fahrzeug-Schnittstelle 20 des Fahrzeugkommunikationssystems 10, basierend auf der Fahrintention umfassen. Beispielsweise kann das Bereitstellen 160 einem periodischen oder einem einmaligen Bereitstellen entsprechen. Beispielsweise kann das Bereitstellen 160 einem direkten Bereitstellen der Fahrintentionsnachricht an Fahrzeuge in einer Umgebung des Fahrzeugs 100 über eine Drahtlosschnittstelle entsprechen.

Die Fahrzeug-zu-Fahrzeug-Schnittstelle, etwa die Fahrzeug-zu-Fahrzeug-Schnittstelle 20 kann beispielsweise ausgebildet sein, über einen geteilten Kommunikationskanal zu kommunizieren (auch engl. shared channel, broadcast channel). In einigen Ausführungsbeispielen kann eine Fahrzeug-zu-Fahrzeug-Kommunikation der Fahrzeug-zu-Fahrzeug-Schnittstelle entweder einer direkten drahtlosen Kommunikationsverbindung zwischen zwei Fahrzeugen, beispielsweise ohne den Einsatz einer Basisstation, entsprechen, etwa gemäß IEEE 802.11p (einem Standard des Institute of Electrical and Electronics Engineers, Institut für Elektroingenieure) oder eine indirekte Kommunikationsverbindung (z.B. mittels eines Basisstation). Die Fahrzeug-zu-Fahrzeug-Schnittstelle 20 kann beispielsweise ausgebildet sein, drahtlos direkt mit weiteren Fahrzeugen in einer Umgebung zu kommunizieren.

Die Auslöser-Bedingungen können zusätzlich zu internen Größen um externe V2X-Größen als externe Auslöser-Bedingungen ergänzt werden. Als Auslöser -Größen können Informationen aus folgenden V2X-Nachrichten dienen. Darüber hinaus könnten noch weitere hier nicht erwähnte V2X-Nachrichten entwickelt oder kombiniert werden, für welche die Idee entsprechend gilt.

In manchen Ausführungsbeispielen kann das Verfahren, wie in Fig. 1a gezeigt, ferner ein Erhalten 140 von Information über externe Auslöser-Größen für die Bestimmung der Fahrintention über eine Fahrzeug-zu-Fahrzeug-Schnittstelle, etwa die Fahrzeug-zu-Fahrzeug Schnittstelle 20, umfassen. Das Bestimmen 150 kann ferner auf der Information über die externen Auslöser-Größen basieren.

Die Information über die externen Auslöser-Größen kann beispielsweise zumindest ein Element der Gruppe von Fahrzeug-zu-Fahrzeug-Statusnachrichten, Fahrzeug-zu-Fahrzeug-Fahrintentionsnachrichten und Fahrzeug-zu-Fahrzeug-Nachrichten mit Umfeldinformation von ein oder mehreren weiteren Fahrzeugen 200 umfassen. Die Fahrzeug-zu-Fahrzeug-Schnittstelle 20 kann beispielsweise ausgebildet sein, die Information über die externen Auslöser-Größen als Fahrzeug-zu-Fahrzeug-Nachrichten an mehrere Empfänger (auch engl. Broadcast) zu erhalten.

Die Umfeldinformationen können beispielsweise auf bordeigenen Sensoren der weiteren Fahrzeuge 200 basieren. In zumindest manchen Ausführungsbeispielen können die Umfeldinformationen Sensordaten der weiteren Fahrzeuge 200 umfassen, beispielsweise Sensordaten einer kollektiven Wahrnehmung der Umwelt der weiteren Fahrzeuge. Die Sensordaten können beispielsweise Rohdaten entsprechen, etwa Kamerasensordaten, Radarsensordaten, Lidarsensordaten und/oder Laufzeitsensordaten, oder sie können verarbeiteten Daten entsprechen, etwa einer Entfernung und/oder Position von durch die weiteren Fahrzeuge 200 erfassten Fremdobjekten.

In einer beispielhaften Implementierung können beispielsweise folgende Fahrzeug-zu-Fahrzeug-Nachrichten als Auslöser-Größen (Trigger-Größen) für entsprechende Auslösebedingungen (Trigger-Bedingungen) genutzt werden

- Cooperative Awareness Message (CAM, periodische Status-Nachricht des Fahrzeugs) V2X-Fahrzeuge senden in der CAM Statusinformationen, wie ihre Position, Geschwindigkeit, Fahrtrichtung, Längs- und Querbeschleunigung, Gierrate, Lenkwinkel u.a. Grundsätzlich können alle diese Größen als Trigger-Größen Verwendung finden. Hierbei kann die Genauigkeit der Informationen berücksichtigt werden. Zu einzelnen dieser Informationen wird auch die Genauigkeitsklasse als Zusatzinformation gesendet. Aus den Informationen empfangener CAM können beispielsweise Bewegungsbilder von V2X-Fahrzeugen in der Umgebung des Ego-Fahrzeugs erzeugt werden. Zusammen mit einer digitalen Karte lassen sich daraus beispielsweise ortsabhängige Trigger-Bedingungen formulieren.

- Decentralized Environmental Notification Message (DENM, ereignisbasierte Nachricht) V2X-Fahrzeuge senden in der DENM Event-Informationen, wie beispielsweise Gefahrensituation, Gefahrenort, liegengebliebenes Fahrzeug und Einsatzfahrzeug. Auch eine straßenseitige Infrastruktur(auch engl. Roadside Unit) kann DENM senden. Beispielsweise könnte die IRS (engl. Intelligent Transport System (ITS) Roadside System, Straßenseitige Infrastruktur eines Intelligenten Transportsystems) eines Baustellensicherungssystems (beispielsweise Sperranhänger) eine DENM mit der Warnung vor einer Baustelle senden. Eine DENM beinhaltet u. a. Informationen zum Event-Typ, zum Event-Ort sowie event-abhängige Informationen wie gesperrte Fahrstreifen. Aus DENM - Informationen lassen sich beispielsweise Trigger-Bedingungen formulieren, wie beispielsweise kein Start eines Fahrstreifenwechsels bei Empfang einer Einsatzfahrzeug-DENM aus einem relevanten Straßensegment. Zusammen mit einer digitalen Karte und anderen Bedingungen lassen sich daraus auch ortsabhängige Trigger-Bedingungen formulieren, wie beispielsweise für den Start eines Manövers Fahrstreifenwechsel in einem bestimmten Abstand vor einer Fahrstreifensperrung aufgrund einer Baustelle.

- Basic Safety Message (BSM, Elementare Sicherheitsnachricht) Die V2X-Nachrichten CAM und DENM wurden für Europa standardisiert. In USA verwendet man die BSM, welche entsprechende Informationen enthält. Daher gelten die Überlegungen zu CAM und DENM analog für BSM.

- Signal Phase and Timing Message (SPAT, Signalphasen und Signalzeitplanungs-Nachricht) Eine Lichtsignalanlage (LSA) sendet ihre Phaseninformation über eine V2X-Nachricht (SPAT-Nachricht) an die Verkehrsteilnehmer in der Umgebung. So können beispielsweise Funktionen wie der "Kolonnenstart vor einer Ampel", "Start-Stopp-Steuerung an einer Ampel" oder "Red Light Violation Warning" (Warnnachricht über das Verletzen einer roten Ampelphase) die Ampelphaseninformation als Trigger verwenden. Die Trigger-Größen können hier die Umschaltzeitpunkte der LSA sein oder die Länge der Phasen (z.B. Grünphase)

- Intention Message (Absichtsnachricht) Intentionen wie Fahrstreifenwechsel, Einfädeln, Einparken, Ausparken, Allokation von Straßenfläche für Manöver (besonders bei großen Fahrzeugen wie Lkw, Bus und landwirtschaftlichen Fahrzeugen oder bei Gespannen) können durch entsprechende Fahrintentionsnachrichten an die Verkehrsteilnehmer gesendet werden. Intentionen sind allgemein als Trigger-Größen verwendbar und können in Auslöser-Bedingungen für kooperative Funktionen wie kooperativer Parkassistent, Notbremsassistent, kooperatives ACC und kooperativer Fahrstreifenwechsel- und Einfädelassistent genutzt werden. Bei kooperativen Funktionen gibt es die beiden Rollen Request (Anfragen) und Accept (Zustimmen). In der Rolle Request könnte beispielsweise eine Fahrintentionsnachricht "Fahrstreifenwechsel" gesendet werden. In der Rolle Accept könnte diese Nachricht als Trigger für den Start der Fahrfunktion "Schaffen einer Lücke" dienen.

- Coordination Message/Agreement Message (kooperative Abstimmung, Koordinationsnachricht/Übereinstimmungsnachricht) Bei der kooperativen Abstimmung zwischen Verkehrsteilnehmern könnten funktionsabhängige Bestätigungsnachrichten (Accept, Acknowledge (Bestätigen)) ausgetauscht werden. Diese können Trigger für den Start entsprechender Fahrfunktionen bzw. nächster Phasen des Abstimmungsprozesses sein.

- Environmental Perception Message (EPM, Umfeldwahrnehmungsnachrichten) In der EPM versendet das Fahrzeug Informationen zu mit Hilfe seiner bordeigenen Sensorik (beispielsweise Radar, Kamera) gewonnenen Umfeldinformationen, wie detektierte dynamische und statische Objekte. Aus diesen könne weitere Informationen abgeleitet werden. Beispielsweise ist die Länge einer Lücke vor einem Fahrzeug möglicherweise identisch mit dem Abstand zu seinem Vorderfahrzeug. Die Bewegungsgeschwindigkeit der Lücke ist möglicherweise identisch mit der Geschwindigkeit des messenden Fahrzeugs. Solche Informationen können als Trigger verwendet werden, wie beispielsweise die Länge und Geschwindigkeit einer Lücke für die Funktion Einfädelassistent. Durch den Trigger könnte beispielsweise eine Fahrfunktion "Synchronisierung mit der Lücke / neben die Lücke fahren zum Einfädeln" gestartet werden (wenn auch andere notwendige Trigger-Bedingungen erfüllt sind).

Ferner kann das Verfahren ferner ein Erhalten von externen Auslöser-Größen von einer Zentralstelle, beispielsweise einem Server oder einem Backend, umfassen. Fahrzeuge können von einem Backend Informationen erhalten, beispielsweise wenn ein Mobilitätsdienst abonniert ist oder wenn sie zu einer Fahrzeugflotte gehören. Informationen können die Verkehrssituation betreffen (Gefahrenwarnung entsprechend DENM, Durchschnittsgeschwindigkeiten auf Straßenabschnitten/Stau), die digitale Karte (Karten-Update) oder auch das Fahrzeug selbst. Verkehrsinformationen können als Trigger-Größen dienen, beispielsweise entsprechend einer DENM. Das Backend kann beispielsweise auch direkt das Fahrzeug zum Start von Funktionen auffordern (spezifische Dienste eines Flottenbetreibers oder Mobilitätsdienstanbieters), beispielsweise bestimmte Daten mit seiner bordeigenen Sensorik aufzunehmen bzw. diese Daten mit einem bestimmten Algorithmus auszuwerten und dann die Ergebnisse an das Backend zu senden. Dann sind entsprechende spezielle dienstabhängige Trigger-Größen zu definieren.

In einem beispielhaften Ausführungsbeispiel kann sich das V2X-Fahrzeug in einem assistierten oder teilautomatischen Betrieb befinden. Das automatisierte Bestimmen der Fahrintention und Erzeugen der Fahrintentionsnachricht kann auf Basis einer Situationsanalyse mit Bewertung von Handlungsoptionen erfolgen. Verkehrsregeln können immer eingehalten werden. Der Algorithmus/Trigger-Bedingung für die automatisierte Entscheidung, eine V2X-Intentionsnachricht zu senden, wird im Folgenden für verschiedene Szenarien dargestellt.

Ein Szenario kann eine "Auffahrt auf eine Autobahn oder vergleichbare Straße" mit folgenden Triggern sein: Fahrzeug befindet sich auf einer Auffahrt (Position auf digitaler Karte) (Straßenabschnitt)

UND

es besteht nur die Möglichkeit auf die Autobahn aufzufahren (Straßenverlauf aus digitaler Karte) (mögliche Fahrintentionen für den Straßenabschnitt)

=

Intentionsnachricht wird gesendet ab einem definierten Abstand vom Schnittpunkt von Auffahrt und Autobahn (Beginn des Beschleunigungsstreifens) (Auslösebedingung).

Die Einschränkung bezüglich der Handlungsoption (nur Auffahren möglich, der Trigger-Größe zugeordnete Wahrscheinlichkeit ist sehr hoch) berücksichtigt die Situation von Gabelungen vor der Auffahrt. Beispielsweise kann die Fahrintentionsnachricht automatisiert gesendet werden wenn die Gabelung passiert ist und Eindeutigkeit besteht.
Ein weiteres beispielhaftes Szenario von Ausführungsbeispielen kann ein "Fahrstreifenwechsel vor Fahrstreifenende / Fahrstreifensperrung auf einer Straße mit mehreren Fahrstreifen in eine Richtung" sein, mit folgenden Triggern:

Fahrzeug befindet sich in zu definierendem Abstand vor dem Ende eines Fahrstreifens (Position auf digitaler Karte) ODER
Fahrzeug befindet sich in zu definierendem Abstand vor einer Fahrstreifensperrung (externer Trigger aus der DENM einer Baustellen-IRS, eines Einsatzfahrzeugs, einer Information eines Backends o. ä.)
UND

[keine Fahrerinteraktion Blinkerbetätigung ODER keine Lenkwinkeländerung größer als definiertes Intervall]

=

Intentionsnachricht wird gesendet ab einem definierten Abstand vom Ende des befahrbaren Fahrstreifens

Der Straßenabschnitt könnte beispielsweise über Muster definiert werden. Beispielsweise kann die digitale Karte Information darüber umfassen, dass es sich bei der aktuellen Position um das Muster "Fahrstreifende / Fahrstreifensperrung auf einer Straße mit mehreren Fahrstreifen in einer Richtung" handelt.
Bei Fahrstreifenende oder -sperrung besteht außer Anhalten vor dem Fahrstreifenende häufig keine Handlungsalternative zum Fahrstreifenwechsel. Es wird davon ausgegangen, dass im Kontext der Assistenzfunktion Anhalten nur als Rückfalllösung angesehen wird, wenn ein Fahrstreifenwechsel aus verkehrlichen Gründen nicht möglich ist. Der Trigger-Größe Fahrzeugposition wird daher in Ausführungsbeispielen eine sehr hohe Wahrscheinlichkeit zugeordnet.
Die Distanzen werden beispielsweise entweder in Abhängigkeit von der maximal zulässigen Geschwindigkeit festgelegt oder dynamisch in Abhängigkeit von der Fahrzeuggeschwindigkeit. Hierbei kann ferner die verbleibende Zeit für ein mögliches Fahrstreifenwechselmanöver berücksichtigt werden. Das Zeitintervall, in dem der Fahrstreifenwechsel stattgefunden haben soll kann so festgelegt werden, dass ein sicherer und komfortabler Fahrstreifenwechsel möglich ist. Die Länge des Intervalls kann entweder statisch festgelegt werden, oder in Abhängigkeit von der aktuellen Verkehrsdichte.
Im oben beschriebenen Szenario hat der Fahrer noch nicht selbständig seine Intention durch beispielsweise Blinkerbetätigung gezeigt. Das Fahrzeug kann in Ausführungsbeispielen vorher automatisch mit dem Senden der Fahrintentionsnachricht agieren. Dies kann ergänzt werden durch Hinweise zum geeigneten Zeitpunkt an den Fahrer, den Fahrstreifenwechsel vorzunehmen.
Ein weiteres beispielhaftes Szenario von Ausführungsbeispielen kann ein "Fahrstreifenwechsel aufgrund von Verkehrssituation" sein, mit folgenden Triggern:

Fahrzeug befährt Straße mit mehreren Fahrstreifen in seiner Fahrtrichtung (Straßenabschnitt) UND
Fahrzeug erhält Informationen über die momentane Durchschnittsgeschwindigkeit (oder eine andere relevante Größe) für die einzelnen Fahrstreifen des Straßensegmentes in Fahrtrichtung von einem Backend für Mobilitätsdienste (externe Trigger-Größe von Backend) ODER

Fahrzeug erhält Informationen über die Geschwindigkeiten der Fahrzeuge in seiner Umgebung aus V2X-Nachrichten (beispielsweise CAM, BSM) und kann selbst die momentane Durchschnittsgeschwindigkeit (oder eine andere relevante Größe) für die einzelnen Fahrstreifen des Straßensegmentes in Fahrtrichtung ermitteln (externe Trigger-Größe ausgewertete V2X-Nachrichten)

ODER

Fahrzeug hat Informationen über die zu erwartende Durchschnittsgeschwindigkeit (oder eine andere relevante Größe) für die einzelnen Fahrstreifen des Straßensegmentes in Fahrtrichtung (beispielsweise hinterlegt in der digitalen Karte auf Basis von historischen Daten)

UND

Fahrzeug befindet sich auf einem Fahrstreifen mit einem Nachbarfahrstreifen mit einer geringeren prognostizierten oder ermittelten aktuellen Durchschnittsgeschwindigkeit (oder eine andere relevante Größe) im Straßensegment in Fahrtrichtung

UND

Fahrer wird über HMI (Human-Machine-Interface, Mensch-Maschine-Schnittstelle) zum Fahrstreifenwechsel aufgefordert oder fahrstreifengenau über die Verkehrssituation informiert (beispielsweise einfärben der Fahrstreifen in Abhängigkeit der erwarteten oder momentanen Durchschnittsgeschwindigkeit)

UND


## Fahrerinteraktion Blinkerbetätigung

## =

## Intentionsnachricht wird gesendet.


Das oben behandelte Szenario entspricht einer fahrstreifengenauen Navigation. Der Algorithmus kann aber auch ablaufen, wenn keine Navigation mit Routenführung stattfindet. Es erfolgt dann z.B. eine fahrstreifengenaue Anzeige der Verkehrssituation. Die Fahrintentionsnachricht kann beispielsweise erst nach erfolgter Interaktion des Fahrers versendet werden, etwa da wegen dem Bestehen von anderen Handlungsoptionen (weiterhin auf dem Fahrstreifen bleiben) die Wahrscheinlichkeit des Fahrstreifenwechsels nur nach Information über die Verkehrssituation und auch nach einer Handlungsaufforderung nicht hoch genug ist.

Neben Trigger-Bedingungen für das automatische Senden einer Fahrintentionsnachricht sind auch Trigger-Bedingungen für den Abbruch bzw. für das Beenden des Bereitstellen 160 möglich. Beispielsweise kann das Bereitstellen 160 ferner auf den (internen und/oder externen) Auslöser-Größen basieren. Beispielsweise können Situationen eintreten, die einen Abbruch des geplanten kooperativen Manövers bzw. einen Abbruch von dessen Vorbereitung erfordern können oder dass das Manöver abgeschlossen und beendet ist. Im Folgenden werden mögliche entsprechende Trigger aufgeführt.

- Der Fahrer bricht aktiv die Funktion ab (beispielsweise Zurücklenken während des Fahrstreifenwechsels).
- Es wird eine höher priorisierte Nachricht empfangen, die ein anderes Manöver erfordert. Z.B. erfordert ein sich näherndes Einsatzfahrzeug eine Gassenbildung. Der Empfang einer DENM eines entsprechenden Einsatzfahrzeugs führt dann zum Abbruch des Sendens der Fahrintentionsnachricht Fahrstreifenwechsel.
- Die verkehrlichen Voraussetzungen für das geplante Manöver sind nicht mehr erfüllt bzw. der Grund für den geplanten Fahrstreifenwechsel ist nicht mehr gegeben.

  ◦ Das langsam vor dem Ego-Fahrzeug fahrende Fahrzeug (Grund für den geplanten Fahrstreifenwechsel) beschleunigt und die Differenz zwischen der gewünschten Geschwindigkeit (beispielsweise ACC-Setzgeschwindigkeit) und der tatsächlich möglichen Geschwindigkeit des Ego-Fahrzeugs auf dem Fahrstreifen sinkt unter eine zu definierende Schwelle (beispielsweise < 5 km/h) oder wird sogar negativ (Fahrzeug entfernt sich mit Geschwindigkeit größer ACC-Setzgeschwindigkeit).
  ◦ Auf dem Zielfahrstreifen (Fahrstreifen nach dem Fahrstreifenwechsel) sinkt die Geschwindigkeit wegen eines verkehrlichen Ereignisses ab, sodass dort eine geringere Geschwindigkeit möglich wäre als auf dem aktuellen Fahrstreifen
  ◦ Plötzliche Wetterereignisse (beispielsweise plötzlicher Starkregen, Nebel, Glätte, Staub) erlauben die geplante Geschwindigkeit auf dem als nächste zu befahrenden Straßensegment nicht.

- Das Manöver ist beendet (Definition Abschluss des Manövers = Ziel erreicht)

  ◦ Anhand der Ego-Position auf der Straße, beispielsweise bei einfachem Fahrstreifenwechsel: die Identifizierung eines Wechsels der Fahrstreifen durch GPS oder bordeigene Sensorik (beispielsweise Kamera)
○ Erreichte Wegpunkte einer Navigationsroute
○ Zurückschnellender Blinker
○ Durch Fahrerassistenzsystem detektiertes Ende eines Manövers (beispielsweise das Ende des Parkmanövers beim Parkassistenten)

Ein weiteres Ausführungsbeispiel ist ein Computerprogramm zur Durchführung zumindest eines der oben beschriebenen Verfahren, wenn das Computerprogramm auf einem Computer, einem Prozessor oder einer programmierbaren Hardwarekomponente abläuft. Ein weiteres Ausführungsbeispiele ist auch ein digitales Speichermedium, das maschinen- oder computerlesbar ist, und das elektronisch lesbare Steuersignale aufweist, die mit einer programmierbaren Hardwarekomponente so zusammenwirken können, dass eines der oben beschriebenen Verfahren ausgeführt wird.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hinein schreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

**Bezugszeichenliste**

| | |
|---|---|
| 10 | Fahrzeugkommunikationssystem |
| 12 | Positionierungsmodul |
| 14 | Kontrollmodul |
| 16 | Speichermodul |
| 18 | Schnittstelle |
| 20 | Fahrzeug-zu-Fahrzeug-Schnittstelle |
| 100 | Fahrzeug |
| 110 | Bestimmen einer Position |
| 120 | Ermitteln eines Straßenabschnitts |
| 130 | Erhalten von Information über interne Auslöser-Größen |
| 140 | Erhalten von Information über externe Auslöser-Größen |
| 150 | Bestimmen der Fahrintention |
| 160 | Bereitstellen einer Fahrintentionsnachricht |
| 200 | Weitere Fahrzeuge |

**Patentansprüche**

1.  Verfahren zum Bestimmen einer Fahrintention für ein Fahrzeug (100), wobei die Fahrintention Information über ein prognostiziertes Fahrmanöver umfasst, umfassend Bestimmen (110) einer Position des Fahrzeugs (100);

    Ermitteln (120) eines Straßenabschnitts basierend auf der Position des Fahrzeugs und einer digitalen Karte, wobei dem Straßenabschnitt ein oder mehrere mögliche Fahrintentionen zugeordnet sind, und wobei den ein oder mehreren möglichen Fahrintentionen ein oder mehrere Auslösebedingungen basierend auf ein oder mehreren Auslöser-Größen zugeordnet sind;
    Erhalten (130) von Information über interne Auslöser-Größen für die Bestimmung einer aktuellen Fahrintention, basierend auf bordeigenen Sensoren oder Aktoren des Fahrzeugs (100); und
    Bestimmen (150) der Fahrintention, basierend auf dem Straßenabschnitt, der Information über die internen Auslöser-Größen und den ein oder mehreren Auslösebedingungen.

2.  Das Verfahren gemäß Anspruch 1, ferner umfassend Bereitstellen (160) einer Fahrintentionsnachricht über eine Fahrzeug-zu-Fahrzeug-Schnittstelle für ein oder mehrere weitere Fahrzeuge (200), basierend auf der Fahrintention.

3.  Das Verfahren gemäß einem der vorhergehenden Ansprüche, wobei das Bestimmen (110) einem Satelliten-basierten Bestimmen der Position entspricht.

4.  Das Verfahren gemäß einem der vorhergehenden Ansprüche, ferner umfassend Erhalten (140) von Information über externe Auslöser-Größen für die Bestimmung der Fahrintention über eine Fahrzeug-zu-Fahrzeug-Schnittstelle, wobei das Bestimmen (150) ferner auf der Information über die externen Auslöser-Größen basiert.

5.  Das Verfahren gemäß Anspruch 4, wobei die Information über die externen Auslöser-Größen zumindest ein Element der Gruppe von Fahrzeug-zu-Fahrzeug-Statusnachrichten, Fahrzeug-zu-Fahrzeug-Fahrintentionsnachrichten und Fahrzeug-zu-Fahrzeug-Nachrichten mit Umfeldinformation von ein oder mehreren weiteren Fahrzeugen (200) umfassen.

6. Das Verfahren gemäß einem der vorhergehenden Ansprüche, wobei die Auslösebedingungen auf ein oder mehreren Wahrscheinlichkeitsfunktionen basierend auf den Auslöser-Größen basieren.

7. Das Verfahren gemäß einem der vorhergehenden Ansprüche, wobei das Bestimmen (150) ferner auf einer Navigationsfunktion des Fahrzeugs (100) basiert.

8. Das Verfahren gemäß einem der vorhergehenden Ansprüche, wobei das Bestimmen (150) ferner auf Information über Verkehrsregeln basiert, wobei das Bestimmen (150) der Fahrintention die Fahrintention so bestimmt, dass keine Verkehrsregeln verletzt werden.

9. Das Verfahren gemäß einem der vorhergehenden Ansprüche, wobei das Bestimmen (150) auf einer Lernfunktion basiert, wobei das Bestimmen (150) die Fahrintention ferner basierend auf vorhergehenden Fahrmanövern eines Fahrers des Fahrzeugs basiert.

10. Fahrzeugkommunikationssystem zum Bestimmen einer Fahrintention für ein Fahrzeug (100), wobei die Fahrintention Information über ein prognostiziertes Fahrmanöver umfasst, ausgebildet zum:

Bestimmen einer Position des Fahrzeugs (100),
Ermitteln eines Straßenabschnitts basierend auf der Position des Fahrzeugs und einer digitalen Karte, wobei dem Straßenabschnitt ein oder mehrere mögliche Fahrintentionen zugeordnet sind, und wobei den ein oder mehreren möglichen Fahrintentionen ein oder mehrere Auslösebedingungen basierend auf ein oder mehreren Auslöser-Größen zugeordnet sind,
Erhalten von Information über interne Auslöser-Größen für die Bestimmung einer aktuellen Fahrintention, basierend auf bordeigenen Sensoren oder Aktoren des Fahrzeugs (100), und zum
Bestimmen der Fahrintention, basierend auf dem Straßenabschnitt, der Information über die internen Auslöser-Größen und den ein oder mehreren Auslösebedingungen.

## Claims

1. Method for determining a driving intention for a vehicle (100), wherein the driving intention comprises information about a predicted driving maneuver, comprising

determining (110) a position of the vehicle (100);
acquiring (120) a road section based on the position of the vehicle and a digital map, wherein one or more possible driving intentions are associated with the road section, and wherein one or more possible driving intentions are associated with one or more trigger conditions based on one or more trigger variables;
obtaining (130) information about internal trigger variables for determining a current driving intention on the basis of on-board sensors or actuators of the vehicle (100); and
determining (150) the driving intention on the basis of the road section, the information about the internal trigger variables and the one or more trigger conditions.

2. Method according to Claim 1, further comprising providing (160) a driving intention message via a vehicle-to-vehicle interface for one or more other vehicles (200) on the basis of the driving intention.

3. Method according to either of the preceding claims, wherein the determination (110) corresponds to a satellite-based determination of the position.

4. Method according to any one of the preceding claims, further comprising obtaining (140) information about external trigger variables for determining the driving intention via a vehicle-to-vehicle interface, wherein the determination (150) is further based on the information about the external trigger variables.

5. Method according to Claim 4, wherein the information about the external trigger variables comprises at least one element of the group of vehicle-to-vehicle status messages, vehicle-to-vehicle driving intention messages, and vehicle-to-vehicle messages with environment information of one or more other vehicles (200).

**6.** Method according to any one of the preceding claims, wherein the trigger conditions are based on one or more probability functions based on the trigger variables.

**7.** Method according to any one of the preceding claims, wherein the determination (150) is further based on a navigation function of the vehicle (100).

**8.** Method according to any one of the preceding claims, wherein the determination (150) is further based on information about traffic regulations, wherein the determination (150) of the driving intention determines the driving intention in such a way that no traffic regulations are violated.

**9.** Method according to any one of the preceding claims, wherein the determination (150) is based on a learning function, wherein the determination (150) of the driving intention is further based on preceding driving maneuvers of a driver of the vehicle.

**10.** Vehicle communication system for determining a driving intention for a vehicle (100), wherein the driving intention comprises information about a predicted driving maneuver, designed to:

determine a position of the vehicle (100),
acquire a road section based on the position of the vehicle and a digital map, wherein one or more possible driving intentions are assigned to the road section, and wherein one or more possible driving intentions are assigned to the one or more trigger conditions on the basis of one or more trigger variables,
obtain information about internal trigger variables for determining a current driving intention on the basis of on-board sensors or actuators of the vehicle (100), and to
determine the driving intention on the basis of the road section, the information about the internal trigger variables and the one or more trigger conditions.

**Revendications**

**1.** Procédé pour déterminer une intention de conduite pour un véhicule (100), l'intention de conduite comprenant des information sur une manœuvre de conduite pronostiquée, comprenant

la détermination (110) d'une position du véhicule (100) ;
la détermination (120) d'une section de route sur la base de la position du véhicule et d'une carte numérique, une ou plusieurs intentions de conduite possibles étant associées à la section de route et une ou plusieurs conditions de déclenchement basées sur une ou plusieurs grandeurs de déclenchement étant associées auxdites une ou plusieurs intentions de conduite possibles ;
l'obtention (130) d'informations sur des grandeurs de déclenchement internes pour la détermination d'une intention de conduite actuelle, sur la base de capteurs ou actionneurs embarqués du véhicule (100) ; et
la détermination (150) de l'intention de conduite, sur la base de la section de route, des informations sur les grandeurs de déclenchement internes et de l'une ou des conditions de déclenchement.

**2.** Procédé selon la revendication 1, comprenant en outre la fourniture (160) d'un message d'intention de conduite par le biais d'une interface véhicule-à-véhicule pour un ou plusieurs autres véhicules (200), sur la base de l'intention de conduite.

**3.** Procédé selon l'une quelconque des revendications précédentes, la détermination (110) correspondant à une détermination basée sur satellite de la position.

**4.** Procédé selon l'une quelconque des revendications précédentes, comprenant en outre l'obtention (140) d'informations sur des grandeurs de déclenchement externes pour la détermination de l'intention de conduite par le biais d'une interface véhicule-à-véhicule, la détermination (150) étant en outre basée sur les informations sur les grandeurs de déclenchement externes.

**5.** Procédé selon la revendication 4, les informations sur les grandeurs de déclenchement externes comprenant au moins un élément compris dans le groupe constitué de messages d'état véhicule-à-véhicule, messages d'intention de conduite véhicule-à-véhicule et messages véhicule-à-véhicule comprenant des informations d'environnement d'un ou plusieurs autres véhicules (200).

6. Procédé selon l'une quelconque des revendications précédentes, les conditions de déclenchement étant basées sur une ou plusieurs fonctions de probabilité basées sur les grandeurs de déclenchement.

7. Procédé selon l'une quelconque des revendications précédentes, la détermination (150) étant en outre basée sur une fonction de navigation du véhicule (100).

8. Procédé selon l'une quelconque des revendications précédentes, la détermination (150) étant en outre basée sur des informations sur les règles de circulation, la détermination (150) de l'intention de conduite déterminant l'intention de conduite de manière à n'enfreindre aucune règle de circulation.

9. Procédé selon l'une quelconque des revendications précédentes, la détermination (150) étant basée sur une fonction d'apprentissage, la détermination (150) basant en outre l'intention de conduite sur la base de manœuvres de conduite antérieures d'un conducteur du véhicule.

10. Système de communication de véhicule pour déterminer une intention de conduite pour un véhicule (100), l'intention de conduite comprenant des information sur une manœuvre de conduite pronostiquée, conçu pour :

   déterminer une position du véhicule (100),
   déterminer une section de route sur la base de la position du véhicule et d'une carte numérique, une ou plusieurs intentions de conduite possibles étant associées à la section de route et une ou plusieurs conditions de déclenchement basées sur une ou plusieurs grandeurs de déclenchement étant associées auxdites une ou plusieurs intentions de conduite possibles,
   obtenir des informations sur des grandeurs de déclenchement internes pour la détermination d'une intention de conduite actuelle, sur la base de capteurs ou actionneurs embarqués du véhicule (100) et pour
   déterminer l'intention de conduite, sur la base de la section de route, des informations sur les grandeurs de déclenchement internes et de l'une ou des conditions de déclenchement.

110

| Bestimmen einer Position |
|---|

120

| Ermitteln eines Straßenabschnitts |
|---|

130

| Erhalten von Information über interne Auslöser-Größen |
|---|

150

| Bestimmen einer Fahrintention |
|---|

# FIG. 1

110

| Bestimmen einer Position |
|---|

120

| Ermitteln eines Straßenabschnitts |
|---|

130 — Erhalten von Information über interne Auslöser-Größen

140 — Erhalten von Information über externe Auslöser-Größen

150

| Bestimmen einer Fahrintention |
|---|

160 — Bereitstellen einer Fahrintentionsnachricht

# FIG. 1a

FIG. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 8847787 B2
- US 20140343836 A1

- DE 102013208758 A1